# EUROPÄISCHE PATENTSCHRIFT

(11) **EP 1 242 267 B1**
(45) Veröffentlichungstag und Bekanntmachung des Hinweises auf die Patenterteilung: **14.07.2004**
(21) Anmeldenummer: 01992659.1
(22) Anmeldetag: 30.10.2001
(51) Int. Cl.: B60R 25/02

(54) **VORRICHTUNG ZUM SPERREN DER LENKSPINDEL EINES KRAFTFAHRZEUGS**
DEVICE FOR LOCKING THE STEERING SPINDLE OF A VEHICLE
DISPOSITIF DE BLOCAGE DE LA BARRE DE DIRECTION D'UN VEHICULE

(30) Priorität: 30.10.2000 DE 10053753
(43) Veröffentlichungstag der Anmeldung: 25.09.2002
(73) Patentinhaber: Audi AG, 85057 Ingolstadt (DE); HUF HÜLSBECK & FÜRST GMBH & CO. KG, 42551 Velbert (DE); Krupp Presta AG Press- Und Stanzwerk, 9492 Eschen (LI)
(72) Erfinder: FUCHS, Carsten, 09127 Chemnitz (DE); PIEPER, Friedrich, 84513 Töging (DE); JAILLANT, Patrik, A-6800 Feldkirch (AT); WAGNER, Günther, A-6832 Rothis (DE)
(74) Vertreter: Oedekoven, Wolf-Dieter, Dipl.-Ing.
(86) Internationale Anmeldenummer: PCT/EP2001/012522
(87) Internationale Veröffentlichungsnummer: WO 2002/036396

(56) Entgegenhaltungen:
- EP-A- 0 265 826
- EP-A- 0 268 879
- EP-A- 0 918 000
- US-A- 6 034 442
- US-A- 6 107 694

## Beschreibung

Die Erfindung bezieht sich auf eine Vorrichtung zum Sperren der von einem Mantelrohr umschlossenen Lenkspindel eines Kraftfahrzeug gegen Drehen gemäß dem Oberbegriff des Anspruchs 1.

Solche Vorrichtungen zur Verriegelung von Kraftfahrzeug-Lenkspindeln, so daß sie nicht mehr gedreht werden können, sind in unterschiedlichen Ausgestaltungen bekannt.

So gehört eine Vorrichtung dieser Art zum Stand der Technik, bei welcher das Sperrglied und der Motor am unteren Ende der Lenkspindel in einem gemeinsamen Gehäuse angeordnet sind. Die Lenkspindel erstreckt sich durch das zugehörige Mantelrohr, durch eine Öffnung in einem Bodenblech des Kraftfahrzeugs und durch das Gehäuse, welches an das Bodenblech auf der dem Mantelrohr abgewandten Seite angeschraubt ist. Das Sperrglied umgibt die Lenkspindel, ist im Gehäuse axial verschieblich aber drehfest gelagert und weist Sperrzähne auf, welche mit . entsprechenden Sperrzähnen der Lenkspindel in Eingriff gebracht werden können. Beim Motor handelt es sich um einen Elektromotor, welcher innen am Gehäuse befestigt ist und über ein Gestänge oder einen Hebel mit dem Sperrglied zusammenwirkt (gattungsbildende EP -B-0 265 826 ).

Bei einer anderen bekannten Vorrichtung sind das Sperrglied und der Motor nahe beieinander außerhalb des Mantelrohres angeordnet, welches die Lenkspindel umschließt. Das hülsenförmige Sperrglied ist auf dem Mantelrohr axial verschiebbar und mit mindestens einem federnden Sperrzahn versehen, welcher mit starren Sperrzähnen der Lenkspindel in Eingriff gebracht werden kann. Der Motor ist ein Elektromotor, der außen am Mantelrohr befestigt ist und über eine Nockenhülse mit dem Sperrglied zusammenwirkt, um es entgegen der Wirkung einer die Lenkspindel umschließenden Schraubendruckfeder zu verschieben, so daß der Sperrzahn des Sperrglieds außer Eingriff mit den Sperrzähnen der Lenkspindel kommt und die Lenkspindel gedreht werden kann. Die Nockenhülse ist auf dem Mantelrohr drehbar gelagert und weist eine Umfangsverzahnung auf, mit welcher ein auf der Welle des Elektromotors befestigtes Ritzel kämmt ( DE -C-195 00 682 ).

Bekannt ist weiterhin eine Vorrichtung der in Rede stehenden Art, bei welcher das Sperrglied und der Motor nahe beieinander in einem gemeinsamen Gehäuse angeordnet sind, durch welches hindurch sich die Lenkspindel erstreckt. Das Sperrglied ist von einer im Gehäuse drehbar gelagerten Welle mit zwei radial abstehenden Sperrnasen gebildet. Die Welle verläuft tangential zu einem auf der Lenkspindel befestigten Sperring, der Sperrzähne aufweist, mit denen die Sperrnasen der Welle in Eingriff gebracht werden können. Als Motor ist ein Elektromotor vorgesehen, der im Gehäuse befestigt ist und über ein Getriebe mit der Welle zusammenwirkt ( DE -C-196 21 326 ).

Der Erfindung liegt die Aufgabe zugrunde, eine Vorrichtung der eingangs angegebenen Art zu schaffen, welche sich insbesondere dadurch auszeichnet, daß sie sehr wenig Platz benötigt, außerordentlich diebstahlsicher ist, die Teleskopierfähigkeit der aus Lenkspindel und Mantelrohr bestehenden Lenksäule nicht eingeschränkt und bei einem Unfall keine Knieverletzung des Fahrers oder der Fahrerin verursacht, weil sie außerhalb des Knieaufschlagbereichs angeordnet ist.

Diese Aufgabe wird bei einer Vorrichtung der eingangs genannten Art durch die im kennzeichnenden Teil des Patentanspruchs 1 aufgeführten Merkmale gelöst. Vorteilhafte Weiterbildungen der erfindungsgemäßen Vorrichtung sind in den restlichen Patentansprüchen angegeben.

Nachstehend ist eine Ausführungsform der erfindungsgemäßen Vorrichtung anhand von Zeichnungen beispielsweise beschrieben. Darin zeigt :
Fig. 1 eine teilweise längsgeschnittene Seitenansicht, wobei das Sperrglied sich in seiner Sperrstellung befindet, und
Fig. 2 die Ansicht gemäß Fig. 1, wobei das Sperrglied sich in seiner Freigabestellung befindet.

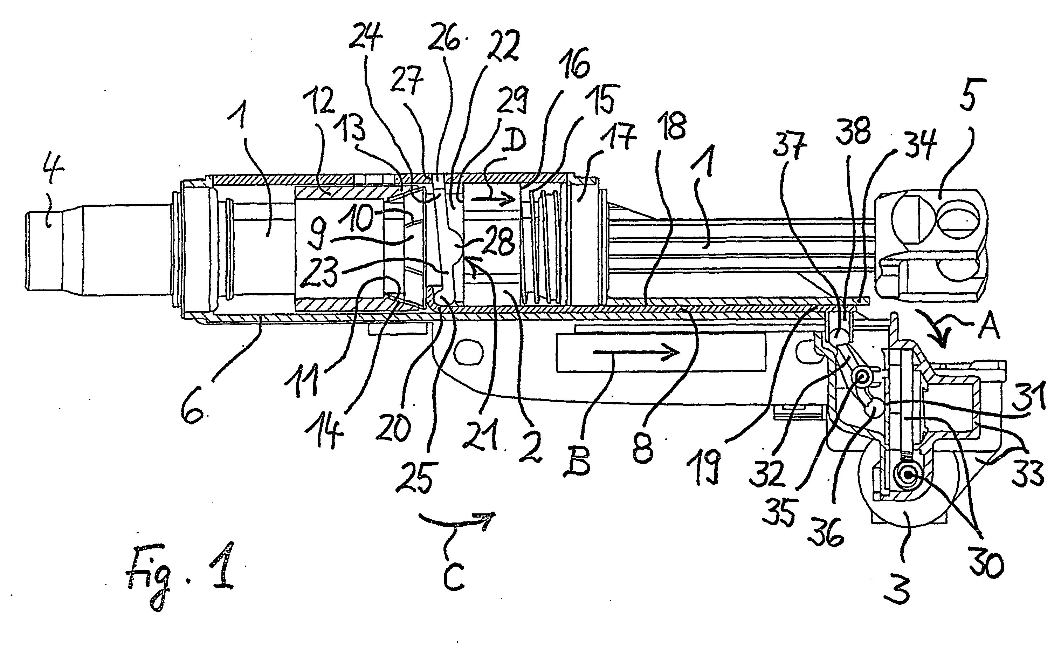

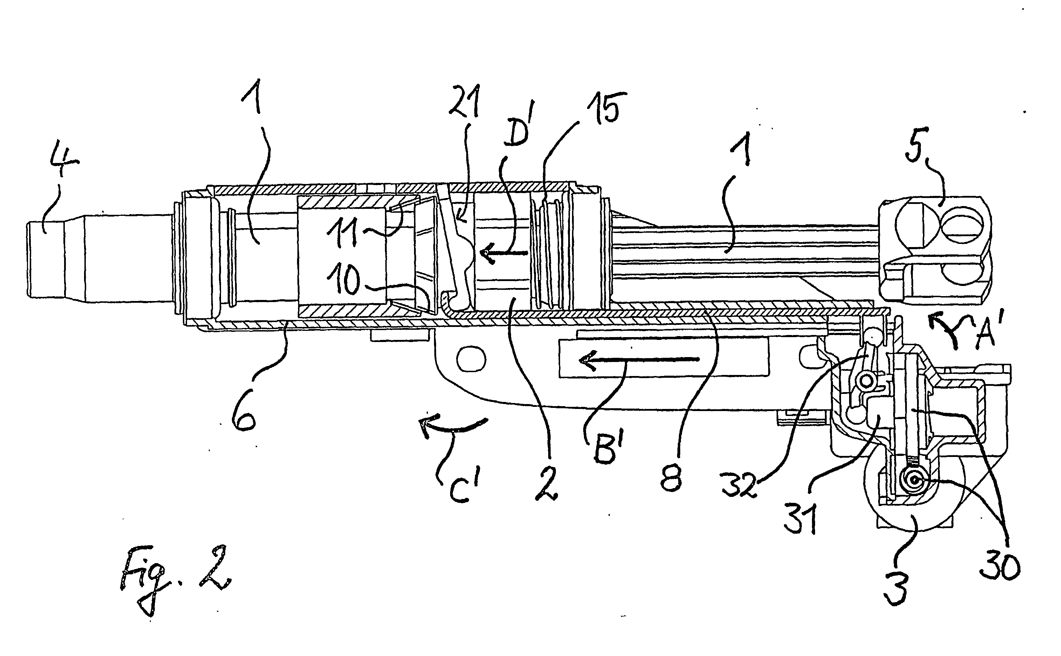

Die dargestellte Vorrichtung dient zum Sperren der Lenkspindel 1 eines Kraftfahrzeugs gegen Drehen und weist ein zwischen der Sperrstellung gemäß Fig. 1 und der Freigabestellung nach Fig. 2 hin- und herbewegliches Sperrglied 2 sowie einen Motor 3 zum Antrieb des Sperrgliedes 2 auf.

Die Lenkspindel 1 ist zwischen ihren beiden Enden 4, 5 von einem Mantelrohr 6 umschlossen. An dem in Fig. 1, 2 linken Ende 4 der Lenkspindel 1 wird das Lenkrad des Kraftfahrzeugs befestigt. Das in Fig. 1, 2 rechte Ende 5 der Lenkspindel 1 wird im Fußraum des Kraftfahrzeugs an dessen Lenkgetriebe angeschlossen.

Das Sperrglied 2 ist in der Nähe des lenkradseitigen Endes 4 der Lenkspindel 1 innerhalb des Mantelrohres 6 angeordnet. Der Motor 3 ist neben dem fußraumseitigen Ende 5 der Lenkspindel 1 angeordnet, und zwar außerhalb des Mantelrohres 6. Der Motor 3 wirkt mit dem Sperrglied 2 über ein Verbindungsglied 8 zusammen, welches innerhalb des Mantelrohres 6 angeordnet ist.

Das Sperrglied 2 ist hülsenförmig ausgebildet, umschließt die Lenkspindel 1 und ist im Mantelrohr 6 axial verschieblich aber drehfest gelagert, so daß das Sperrglied 2 sich im Mantelrohr 6 zwar nicht drehen, wohl aber entlang der Lenkspindel 1 hin- und herbewegen kann. Das Sperrglied 2 ist an dem in Fig. 1, 2 linken Ende 9 konisch ausgebildet und an dem sich in Richtung auf das lenkradseitige Ende 4 der Lenkspindel 1 verjüngenden Ende 9 mit äußeren, in Umfangsrichtung gleichmäßig verteilten Sperrzähnen 10 versehen, welche mit entsprechenden Sperrzähnen 11 der Lenkspindel 1 zusammenwirken.

Die Sperrzähne 11 der Lenkspindel 1 sind an einer Hülse 12 vorgesehen, welche auf der Lenkspindel 1 befestigt ist. Die Hülse 12 weist an dem dem Sperrglied 2 benachbarten Ende 13 eine konische Bohrung 14 zur Aufnahme des konischen Endes 9 des Sperrgliedes 2 auf. In der sich wie das Ende 9 des Sperrgliedes 2 in Richtung auf das lenkradseitige Ende 4 der Lenkspindel 1 verjüngenden Bohrung 14 der Hülse 12 sind die Sperrzähne 11 in Umfangsrichtung gleichmäßig verteilt.

Das Sperrglied 2 ist durch eine Schraubendruckfeder 15 in Richtung auf die Hülse 12 der Lenkspindel 1 belastet. Die Schraubendruckfeder 15 umschließt die Lenkspindel 1 auf der der Hülse 12 abgewandten Seite des Sperrgliedes 2 und stützt sich mit dem einen Ende an der dem fußraumseitigen Ende 5 der Lenkspindel 1 zugewandten Stirnfläche 16 des Sperrgliedes 2 ab, mit dem anderen Ende an einem im Mantelrohr 6 befestigten Ring 17 .

Das Verbindungsglied 8 des Motors 3 und des Sperrgliedes 2 ist als längliche Platte ausgebildet, welche sich parallel zur Lenkspindel 1 innerhalb des Mantelrohres 6 in einem Kanal 18 des Mantelrohres 6 erstreckt und axial verschieblich gelagert ist. Der Motor 3 wirkt mit dem in Fig. 1, 2 rechten Ende 19 des Verbindungsgliedes 8 zusammen, welches seinerseits an dem in Fig. 1, 2 linken Ende 20 über einen U-förmigen Schwenkbügel 21 mit dem Sperrglied 2 zusammenwirkt.

Der U-förmige Schwenkbügel 21 ist in einer äußeren Ringnut 22 des Sperrgliedes 2 aufgenommen und umgreift das Sperrglied 2 in Fig. 1, 2 von oben. Der Schwenkbügel 21 weist zwei seitliche Schenkel 23 und einen die beiden Schenkel 23 miteinander verbindenden Quersteg 24 auf. An den beiden freien Enden 25 der Schenkel 23 greift das Verbindungsglied 8 mit seinem benachbarten Ende 20 an. Auf der dem Verbindungsglied 8 abgewandten Seite des Sperrgliedes 2 ist der Schwenkbügel 21 am Mantelrohr 6 schwenkbar gelagert, und zwar mittels eines in der Mitte des Querstegs 24 von demselben abstehenden Vorsprungs 26, welcher von den Schenkeln 23 weg gerichtet ist und in eine Öffnung 27 des Mantelrohrs 6 eingreift. Zwischen ihren freien Enden 25 und dem Quersteg 24 sind die beiden Schenkel 23 auf der Seite, auf welcher sich das Verbindungsglied 8 und die Schraubendruckfeder 15 befinden, mit je einem konvexen Vorsprung 28 versehen, welcher an der benachbarten Seitenflanke 29 der Ringnut 22 anliegt.

Bei dem Motor 3 handelt es sich um einen Elektromotor, der über ein Getriebe 30, einen Schieber 31 und einen zweiarmigen Schwenkhebel 32 mit dem Verbindungsglied 8 zusammenwirkt. Der Motor 3, das Getriebe 30, der Schieber 31 und der Schwenkhebel 32 sind in einem gemeinsamen Gehäuse 33 untergebracht, welches außen am Mantelrohr 6 befestigt ist, und zwar am fußraumseitigen Ende 34 desselben. Der Schwenkhebel 32 ist um eine im Gehäuse 33 angeordnete Achse 35 schwenkbar gelagert, um mit dem einen Ende 36 am Schieber 31 anzuliegen und mit dem anderen Ende 37 in einen Topf 38 am benachbarten Ende 19 des Verbindungsgliedes 8 einzugreifen.

Die dargestellte Vorrichtung zur Verriegelung der Kraftfahrzeug-Lenkspindel 1 gegen Drehen funktioniert folgendermaßen.

In Fig. 1 ist die Lenkspindel 1 verriegelt. Das Sperrglied 2 nimmt seine Sperrstellung ein, in welcher es mit seinen Sperrzähnen 10 zwischen die Sperrzähne 11 der Lenkspindel 1 greift, so daß die Lenkspindel 1 mit dem Mantelrohr 6 gekuppelt ist und im Mantelrohr 6 nicht gedreht werden kann. Um die Lenkspindel 1 zu entriegeln, wird der Motor 3 eingeschaltet, so daß er über das Getriebe 30 und den Schieber 31 den Schwenkhebel 32 in Richtung des Pfeils A verschwenkt. Der Schwenkhebel 32 verschiebt dabei das Verbindungsglied 8 in Richtung des Pfeils B, welches seinerseits den Schwenkbügel 21 in Richtung des Pfeils C verschwenkt. Der Schwenkbügel 21 verschiebt dabei das Sperrglied 2 in Richtung des Pfeils D entgegen der Wirkung der Schraubendruckfeder 15 in seine Freigabestellung, in welcher die Sperrzähne 10 des Sperrgliedes 2 außer Eingriff mit den Sperrzähnen 11 der Lenkspindel 1 sind, so daß die Lenkspindel 1 im Mantelrohr 6 gedreht werden kann.

Es ergibt sich der Zustand gemäß Fig. 2. Um die Lenkspindel 1 wieder zu verriegeln, wird der Motor 3 in Gang gesetzt, so daß sich der Schwenkhebel 32, das Verbindungsglied 8, der Schwenkbügel 21 und das Sperrglied 2 unter der Wirkung der Schraubendruckfeder 15 jeweils in Richtung des Pfeils A' bzw. B' bzw. C' bzw. D' bewegen und sich wieder der Zustand nach Fig. 1 einstellt.

## Patentansprüche

1. Vorrichtung zum Sperren der von einem Mantelrohr (6) umschlossenen Lenkspindel (1) eines Kraftfahrzeugs gegen Drehen, welche ein zwischen einer Sperrstellung und einer Freigabestellung hin- und herbewegliches Sperrglied (2) und einen Motor (3) zum Antrieb des Sperrglieds (2) aufweist wobei der Motor (3) neben dem fußraumseitigen Ende (5) der Lenkspindel (1) angeordnet ist und mit dem Sperrglied (2) über ein Verbindungsglied (8) zusammenwirkt, **dadurch gekennzeichnet, daß** das Sperrglied (2) in der Nähe des lenkradseitigen Endes (4) der Lenkspindel (1) innerhalb des Mantelrohres (6) und das Verbindungsglied (8) innerhalb des Mantelrohres (6) angeordnet sind.

2. Vorrichtung nach Anspruch 1, **dadurch gekennzeichnet, daß** das Sperrglied (2) hülsenförmig ausgebildet und mit Sperrzähnen (10) versehen ist, die Lenkspindel (1) umschließt und axial verschiebbar ist, um in der Sperrstellung mittels der Sperrzähne (10) die Lenkspindel (1) mit dem Mantelrohr (6) zu kuppeln.

3. Vorrichtung nach Anspruch 2, **dadurch gekennzeichnet, daß** das hülsenförmige Sperrglied (2) im Mantelrohr (6) axial verschieblich, aber drehfest gelagert ist und seine Sperrzähne (10) mit entsprechenden Sperrzähnen (11) der Lenkspindel (1) zusammenwirken.

4. Vorrichtung nach Anspruch 1, 2 oder 3, **dadurch gekennzeichnet, daß** das Verbindungsglied (8) unmittelbar mit dem Sperrglied (2) zusammenwirkt.

5. Vorrichtung nach Anspruch 2 oder 3, **dadurch gekennzeichnet, daß** das Verbindungsglied (8) über einen U-förmigen Schwenkbügel (21) mit dem hülsenförmigen Sperrglied (2) zusammenwirkt, welcher das Sperrglied (2) umgreift und auf der dem Verbindungsglied (8) abgewandten Seite des Sperrgliedes (2) in der Mitte seines Querstegs (24) am Mantelrohr (6) schwenkbar gelagert ist, wobei das Verbindungsglied (8) an den freien Enden (25) der beiden Schenkel (23) des Schwenkbügels (21) angreift und die Schenkel (23) ihrerseits zwischen ihren freien Enden (25) und dem Quersteg (24) des Schwenkbügels (21) am Sperrglied (2) angreifen.

6. Vorrichtung nach einem der vorstehenden Ansprüche, **dadurch gekennzeichnet, daß** das Sperrglied (2) in die Sperrstellung federbelastet ist.

7. Vorrichtung nach Anspruch 6 in Verbindung mit Anspruch 2, 3 oder 5, **dadurch gekennzeichnet, daß** das hülsenförmige Sperrglied (2) durch eine Schraubendruckfeder (15) in die Sperrstellung belastet ist, welche die Lenkspindel (1) umschließt und sich einerseits am Mantelrohr (6) sowie andererseits am Sperrglied (2) abstützt.

8. Vorrichtung nach einem der vorstehenden Ansprüche, **dadurch gekennzeichnet, daß** der Motor (3) ein Elektromotor ist.

9. Vorrichtung nach einem der vorstehenden Ansprüche, **dadurch gekennzeichnet, daß** das Verbindungsglied (8) von einer länglichen Platte gebildet ist, welche parallel zur Lenkspindel (1) axial verschiebbar ist.

10. Vorrichtung nach Anspruch 9, **dadurch gekennzeichnet, daß** der Motor (3) über einen zweiarmigen Schwenkhebel (32) mit dem Verbindungsglied (8) zusammenwirkt, welcher um eine mantelrohrfeste Achse (35) schwenkbar gelagert ist.

11. Vorrichtrung nach Anspruch 10, **dadurch gekennzeichnet, daß** der Motor (3) und der Schwenkhebel (32) in einem gemeinsamen Gehäuse (33) untergerbracht sind, welches außen am fußraumseitigen Ende (34) des Mantelrohres (6) befestigt und mit der Schwenkachse (35) des Schwenkhebels (32) versehen ist.

## Claims

1. Device for locking the steering spindle (1) enclosed by a tubular casing (6) of a motor vehicle to prevent its turning, which comprises a locking element (2) capable of moving to and fro between a locked position and a released position and a motor (3) for driving the locking element (2), wherein the motor (3) is arranged close to the foot-end (5) of the steering spindle (1) and co-operates with the locking element (2) via a connecting element (8), **characterised in that** the locking element (2) is arranged in the proximity of the steering-wheel-end (4) of the steering spindle (1) within the tubular casing (6) and the connecting element (8) is arranged within the tubular casing (6).

2. Device according to claim 1, **characterised in that** the locking element (2) is designed in the form of a sleeve and is provided with locking teeth (10), encloses the steering spindle (1) and can be displaced in an axial direction, in order to connect the steering spindle (1) to the tubular casing (6) in the locked position by means of the locking teeth (10).

3. Device according to claim 2, **characterised in that** the sleeve-shaped locking element (2) can be displaced in an axial direction within the tubular casing (6) but is mounted in a rotationally rigid manner, and that its locking teeth (10) co-operate with corresponding locking teeth (11) of the steering spindle (1).

4. Device according to claim 1,2 or 3, **characterised in that** the connecting element (8) co-operates directly with the locking element (2).

5. Device according to claim 2 or 3, **characterised in that** the connecting element (8) co-operates, via a U-shaped swivel clip (21), with the sleeve-shaped locking element (2), which engages around the locking element (2) and is mounted on the tubular casing (6) in a rotatable manner at the side of the locking element (2) facing away from the connecting element (8) and in the middle of its transverse web (24), the connecting element (8) engaging at the free ends (25) of the two arms (23) of the swivel clip (21) and the arms (23), in turn, engaging with the locking element (2) between the free ends (25) and the transverse web (24) of the swivel clip (21).

6. Device according to any one of the preceding claims, **characterised in that** the locking element (2) is spring loaded into the locked position.

7. Device according to claim 6 in conjunction with claim 2, 3 or 5, **characterised in that** the sleeve-shaped locking element (2) is loaded into the locked position by a helical compression spring (15), which encloses the steering spindle (1) and which is supported at one side on the tubular casing (6) and at the other side by the locking element (2).

8. Device according to any one of the above claims **characterised in that** the motor (3) is an electric motor.

9. Device according to any one of the preceding claims, **characterised in that** the connecting element (8) is formed by an elongated plate, which can be displaced in an axial direction parallel to the steering spindle (1).

10. Device according to claim 9, **characterised in that** the motor (3) co-operates, via a two-arm swivel lever (32), with the connecting element (8), which is mounted in a rotatable manner around an axis (35) fixed to the tubular casing.

11. Device according to claim 10, **characterised in that** the motor (3) and the swivel lever (32) are housed in a common housing (33), which is attached externally to the foot end (34) of the tubular casing (6) and is provided with the axis of rotation (35) of the swivel lever (32).

## Revendications

1. Dispositif pour empêcher la rotation d'un arbre de direction (1) d'un véhicule à moteur, entouré par un tube enveloppe (6), lequel dispositif présente un organe de blocage (2) mobile en va-et-vient entre une position de blocage et une position de déblocage et un moteur (3) pour actionner l'organe de blocage (2), le moteur (3) étant disposé près de l'extrémité (5) de l'arbre de direction (1) située du côté de l'espace-pied et coopérant avec l'organe de blocage (2) par l'intermédiaire d'un organe de liaison (8), **caractérisé en ce que** l'organe de blocage (2) est disposé à l'intérieur du tube enveloppe (6) près de l'extrémité (4) de l'arbre de direction (1) située du côté du volant et que l'organe de liaison (8) est disposé à l'intérieur du tube enveloppe (6).

2. Dispositif selon la revendication 1, **caractérisé en ce que** l'organe de blocage (2) est en forme de manchon et pourvu de dents de blocage (10), entoure l'arbre de direction (1) et est mobile dans le sens axial pour coupler, dans la position de blocage, l'arbre de direction (1) avec le tube enveloppe (6) au moyen des dents de blocage (10).

3. Dispositif selon la revendication 2, **caractérisé en ce que** l'organe de blocage (2) en forme de manchon est supporté dans le tube enveloppe (6) de manière mobile dans le sens axial mais fixe en rotation et que ses dents de blocage (10) coopèrent avec des dents de blocage (11) correspondantes de l'arbre de direction (1).

4. Dispositif selon la revendication 1, 2 ou 3, **caractérisé en ce que** l'organe de liaison (8) coopère directement avec l'organe de blocage (2).

5. Dispositif selon la revendication 2 ou 3, **caractérisé en ce que** l'organe de liaison (8) coopère avec l'organe de blocage (2) en forme de manchon par l'intermédiaire d'un étrier pivotant (21) en forme de U qui entoure l'organe de blocage (2) et qui est supporté de manière pivotante sur le tube enveloppe (6) sur le côté de l'organe de blocage (2) opposé à l'organe de liaison (8) au milieu de sa traverse (24), l'organe de liaison (8) se mettant en prise sur les extrémités libres (25) des deux bras (23) de l'étrier pivotant (21) et les bras (23) se mettant pour leur part en prise sur l'organe de blocage (2) entre leurs extrémités libres (25) et la traverse (24) de l'étrier pivotant (21).

6. Dispositif selon l'une quelconque des revendications précédentes, **caractérisé en ce que** l'organe de blocage (2) est contraint par ressort dans la position de blocage.

7. Dispositif selon la revendication 6 en combinaison avec la revendication 2, 3 ou 5, **caractérisé en ce que** l'organe de blocage (2) en forme de manchon est contraint dans la position de blocage par un ressort de compression hélicoïdal (15), qui entoure l'arbre de direction (1) et s'appuie d'une part sur le tube enveloppe (6) et d'autre part sur l'organe de blocage (2).

8. Dispositif selon l'une quelconque des revendications précédentes, **caractérisé en ce que** le moteur (3) est un moteur électrique.

9. Dispositif selon l'une quelconque des revendications précédentes, **caractérisé en ce que** l'organe de liaison (8) est formé par une plaque allongée mobile dans le sens axial parallèlement à l'arbre de direction (1).

10. Dispositif selon la revendication 9, **caractérisé en ce que** le moteur (3) coopère par l'intermédiaire d'un levier pivotant à deux bras (32) avec l'organe de liaison (8), qui est supporté de manière pivotante autour d'un axe (35) solidaire du tube enveloppe.

11. Dispositif selon la revendication 10, **caractérisé en ce que** le moteur (3) et le levier pivotant (32) sont logés dans un boîtier (33) commun qui est fixé à l'extérieur du tube enveloppe (6) à son extrémité (34) située du côté de l'espace-pied et qui est pourvu de l'axe de pivotement (35) du levier pivotant (32).
